# EUROPÄISCHE PATENTSCHRIFT

(11) **EP 0 740 100 B1**
(45) Veröffentlichungstag und Bekanntmachung des Hinweises auf die Patenterteilung: **11.07.2001**
(21) Anmeldenummer: 96103120.0
(22) Anmeldetag: 01.03.1996
(51) Int. Cl.: F16L 37/088

(54) **Steckkupplung für Druckmittel-Leitungen**
Plug connector for high pressure fluid lines
Joint à emboîtement pour tuyauterie de fluide à haute pression

(30) Priorität: 29.04.1995 DE 19515849
(43) Veröffentlichungstag der Anmeldung: 30.10.1996
(73) Patentinhaber: Armaturenfabrik Hermann Voss GmbH + Co. KG, 51688 Wipperfürth (DE)
(72) Erfinder: Geiger, Karl-Otto, 51688 Wipperfürth (DE); Goller, Bernd, 51688 Wipperfürth (DE)
(74) Vertreter: Patentanwälte Dr. Solf & Zapf

(56) Entgegenhaltungen:
- WO-A-94/08170
- WO-A-94/27077
- DE-A- 2 717 908
- GB-A- 2 268 238
- US-A- 4 793 637
- US-A- 5 069 424

## Beschreibung

Die vorliegende Erfindung betrifft eine Steckkupplung für Druckmittel-Leitungen, mit einem eine Aufnahmeöffnung für ein Steckerteil aufweisenden Kupplungsteil und einem im Bereich der Aufnahmeöffnung gelagerten, federelastisch radialverformbaren Haltering zum Arretieren des eingesteckten Steckerteils, indem er in einer Arretierstellung eine am Steckerteil gebildete Raststufe in radialer Richtung rastend formschlüssig hintergreift.

Eine derartige Steckkupplung ist beispielsweise in der DE-C-27 17 908 beschrieben. Dabei ist der Haltering aufgrund eines seinen Ringumfang unterbrechenden Schlitzes federelastisch spreizbar, wobei er zwei angeformte Lösearme aufweist, die sich ausgehend vom Bereich des Schlitzes und einer radialen, zum seitlichen Einschieben des Halterings vorgesehenen Durchführöffnung des Kupplungsteils außerhalb des Kupplungsteils in entgegengesetzten Richtungen etwa kreisbogenförmig erstrecken. Diese Lösearme weisen an ihren freien Enden Verdickungen bzw. Griffnocken auf. Durch Zusammendrücken der Griffnocken auf deren dem Schlitz des Halterings diametral gegenüberliegenden Seite kann über die Lösearme der Haltering von außen zum Entriegeln des Steckerteils gespreizt werden, so daß dann das Steckerteil entnommen werden kann. Die bekannte Steckkupplung weist ferner eine Schutzkappe auf, die verschiebbar auf dem Kupplungsteil sitzt, um einerseits einen Schutz gegen Verschmutzungen sowie andererseits auch eine Sicherung gegen ungewolltes Lösen des Steckerteils zu gewährleisten. Letzteres geschieht dadurch, daß die Schutzkappe Kammern zur im wesentlichen formschlüssigen Aufnahme der Griffnocken der Lösearme aufweist. Hierdurch wird ein Zusammendrücken zum Spreizen des Halteringes verhindert. Die bekannte Steckkupplung hat sich daher in der Praxis bereits gut bewährt, allerdings hat sich gezeigt, daß die Schutzkappe auch in ihre Verriegelungsposition gebracht werden kann, wenn das Steckerteil noch nicht durch den Haltering arretiert ist. Ein solcher Zustand ist aber von außen nicht erkennbar. Eine spätere Druckbeaufschlagung der Steckkupplung würde zu einem unkontrollierten, plötzlichen Lösen mit den entsprechenden Folgen (Druckverluste) führen.

Die GB-A-2 268 238 beschreibt eine Steckkupplung, bei der ein Rohr mit seinem freien Ende in einer Aufnahmeöffnung eines Kupplungsteils einsteckbar ist. Zur Arretierung des Rohrs ist in dem Kupplungsteil ein elastisches Halteelement in Form einer etwa U-förmigen Halteklammer so gelagert, dass zwei parallele Klammerschenkel den Öffnungsquerschnitt schneiden, so dass sie nach dem Einstecken des Rohrendes eine daran gebildete Schulter rastend hintergreifen. Dabei soll die Halteklammer der Bedienungsperson eine Information vermitteln, wenn die Steckverbindung ordnungsgemäß gesteckt ist. Dies wird erreicht, indem die Halteklammer beim Einrasten ein Klick-Geräusch erzeugt, so dass hier eine akustische Steckkontrolle vorgesehen ist. Dies hat den Nachteil, dass in Anwendungsbereichen mit starken Umgebungsgeräuschen, beispielsweise in Maschinenhallen, der Steckvorgang möglicherweise nicht sicher genug kontrolliert werden kann.

In der WO-A-94/27077 ist eine weitere Steckkupplung beschrieben, die ebenfalls mit einer Steckkontrolle ausgestattet ist. Dabei handelt es sich um ein zungenartiges Element eines in radial sehr weit abstehender Anordnung an dem Kupplungsteil gehalterten Teils, wobei das Element durch eine Öffnung in das Kupplungsteil eingreift und beim Einstecken des Steckerteils von einem daran angeordneten Ringsteg verbogen wird. Als Halteelement ist ein ringförmiger, formstabiler, also nicht elastisch verformbarer, Riegel in radialer Richtung verschiebbar gelagert und wirkt über eine Schrägfläche mit dem Ringsteg des Steckerteils rastend zusammen. Das Steckerteil weist in seinem außerhalb des Kupplungsteils verbleibenden Bereich einen Ringsteg auf, der offensichtlich einen Anschlag für eine auf einen endseitigen Schlauchstutzen aufzusteckende Leitung bildet. Der Ringsteg ist im Durchmesser kleiner als die Aufnahmeöffnung des Kupplungsteils ausgebildet und ist in der Verriegelungsstellung deutlich in axialer Richtung vom Kupplungsteil entfernt.

Der vorliegenden Erfindung liegt die Aufgabe zugrunde, eine Steckkupplung derart zu schaffen, daß der Steckvorgang mit größerer Sicherheit bis zum ordnungsgemäßen, vollständigen Arretieren des Steckerteils durch Einrasten des Halteringes durchgeführt werden kann, so daß ein späteres, ungewolltes Lösen der Steckverbindung weitgehend ausgeschlossen ist.

Erfindungsgemäß wird dies durch die Merkmale des Patentanspruchs 1 erreicht. Somit ist mindestens ein die Arretierstellung anzeigendes Steckkontrollelement vorgesehen. Dieses Steckkontrollelement macht es vorteilhafterweise möglich, von außen zu erkennen, ob die Arretierstellung, d.h. diejenige Lage des Steckerteils, in der der Haltering die Raststufe sicher formschlüssig hintergreift, ordnungsgemäß erreicht wurde oder noch nicht. Erst nach positiver Feststellung des Erreichens der Arretierstellung können dann bevorzugt noch weitere Arretierungen vorgenommen werden, beispielsweise nach Art der bekannten Schutzkappe, die dann die Lösearme des Halterings zusätzlich arretiert.

Gemäß der Erfindung ist das Steckkontrollelement als ein in einer relativ zu der Raststufe definierten Anordnung auf dem Steckerteil sitzendes Anzeigeelement ausgebildet, welches einen Sichtkontrollabschnitt aufweist, der in der Arretierstellung außerhalb der Aufnahmeöffnung des Kupplungsteils in einer definierten Relativstellung gegenüber dem Kupplungsteil angeordnet ist. Somit gibt der Sichtkontrollabschnitt durch seine relative Lage gegenüber dem Kupplungsteil unmittelbar auch Aufschluß über die relative Lage der Stecker-Raststufe gegenüber dem - ja in axialer Richtung im wesentlichen ortsfest im Kupplungsteil sitzenden - Haltering. Hierbei sind das Anzeigeelement im wesentlichen ringförmig und der Sichtkontrollabschnitt im wesentlichen senkrecht zur Steckachse ringscheibenförmig ausgebildet, wobei der Sichtkontrollabschnitt in der Arretierstellung im wesentlichen ohne axialen Spalt stirnseitig vor dem Kupplungsteil anliegt. Erst wenn diese Stellung sichtbar bzw. erkennbar erreicht ist, ist der Steckvorgang auch tatsächlich durch formschlüssiges Verrasten des Halteringes abgeschlossen.

Weitere vorteilhafte Ausgestaltungsmerkmale der Erfindung sowie bestimmte Ausführungsvarianten sind in den Unteransprüchen sowie der folgenden Beschreibung enthalten.

Anhand von einigen in der Zeichnung veranschaulichten, bevorzugten Ausführungsbeispielen soll die Erfindung näher erläutert werden. Dabei zeigen:
- Fig. 1: einen Halb-Axialschnitt durch eine erfindungsgemäße Steckkupplung in einer ersten Ausführungsform während des Einsteckvorgangs,
- Fig. 2: einen Axialschnitt analog zu Fig. 1, jedoch in der Arretierstellung,
- Fig. 3: einen Querschnitt in der Schnittebene III-III gemäß Fig. 2,
- Fig. 4 bis 6: jeweils einen Halb-Axialschnitt eine Möglichkeit, die zweiten zusätzlich zu der Ausführung nach Fig. 1 bis 3 angewandt werden kann, und zwar in zwei verschiedenen Stellungen während des Einsteckvorganges (Fig. 4 und 5) sowie in der Arretierstellung (Fig. 6).

In den verschiedenen Figuren der Zeichnung sind gleiche Teile stets mit den gleichen Bezugszeichen versehen, so daß jede eventuell nur einmal vorkommende Beschreibung eines Teils analog auch bezüglich der anderen Zeichnungsfiguren gilt, in denen dieses Teil mit dem entsprechenden Bezugszeichen ebenfalls zu erkennen ist.

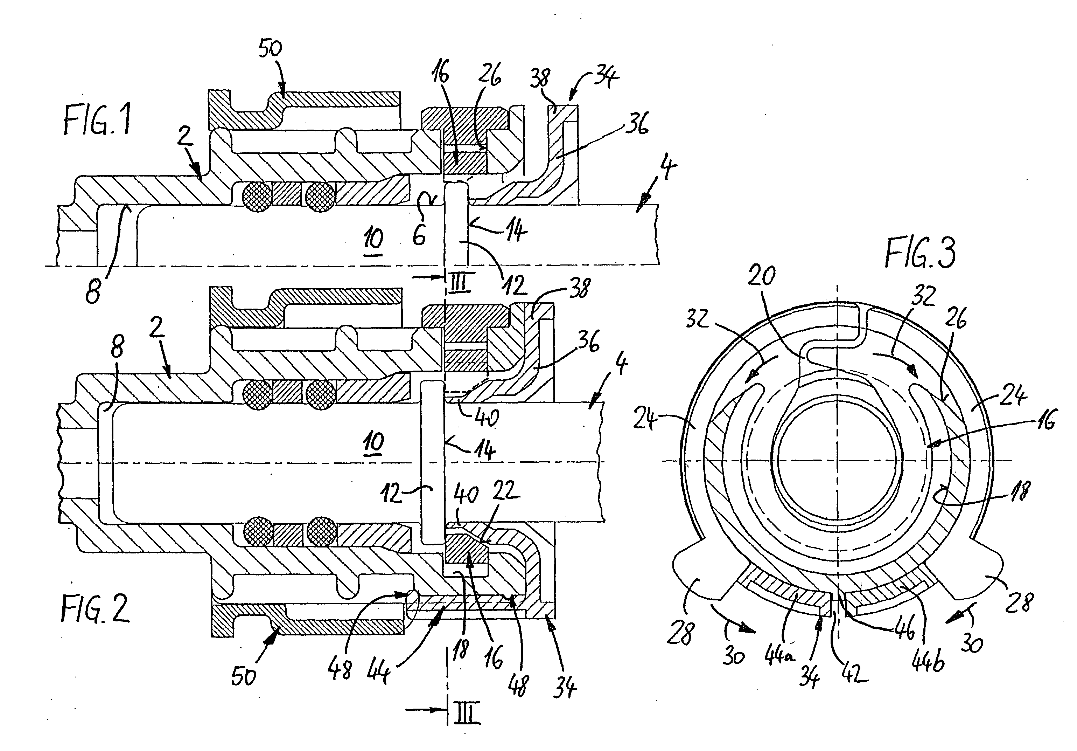

Wie sich zunächst aus Fig. 1 bis 3 ergibt, besteht eine erfindungsgemäße Steckkupplung aus einem Kupplungsteil 2 und einem Steckerteil 4. Das Steckerteil 4 weist bevorzugt einen als Rohrstück mit einer zylindrischen Außenumfangsfläche 6 ausgebildeten und dichtend in eine Aufnahmeöffnung 8 des Kupplungsteils 2 einsteckbaren Steckerschaft 10 auf, der einen wulstartigen, in radialer Richtung von der Außenumfangsfläche 6 abstehenden Ringsteg 12 aufweist. Dieser Ringsteg 12, der bevorzugt durch spanlose Stauchverformung des Rohrstückes gebildet sein kann, weist auf seiner dem freien, einzusteckenden Ende des Steckerschaftes 10 axial abgekehrten Seite eine senkrecht zur Steckachse angeordnete Ringstufenfläche auf, die eine Raststufe 14 bildet. Die Raststufe 14 wirkt zum Arretieren des Steckerteils 4 im eingesteckten Zustand des Steckerschaftes 10 mit einem in dem Kupplungsteil 2 gelagerten Haltering 16 zusammen. Der Haltering 16 sitzt derart in einer Innenringnut 18 des Kupplungsteils 2, daß er bereichsweise auch in den Öffnungsquerschnitt der Aufnahmeöffnung 8 eingreift. Dabei weist der Haltering 16 einen seinen Ringumfang unterbrechenden Schlitz 20 auf (s. Fig.3), so daß er federelastisch spreizbar ist. Hierzu besitzt er in seinem radial inneren und der offenen Seite der Aufnahmeöffnung 8 zugekehrten Kantenbereich eine Schrägfläche 22 derart, daß beim Einstecken des Steckerteils 4 durch Anlage des Ringsteges 12 an der Schrägfläche 22 der Haltering 16 selbsttätig aufgeweitet wird (s. Fig.1), bis er in der Arretierstellung (Fig.2) die Raststufe 14 formschlüssig rastend hintergreift (vgl. auch Fig. 6).

Um hierbei ein Lösen des Steckerteils 4 zu ermöglichen, weist der Haltering 16 zwei angeformte, ausgehend vom Bereich des Schlitzes 20 in entgegengesetzten Richtungen etwa kreisbogenförmig und konzentrisch den Haltering 16 radial beabstandet umschließende Lösearme 24 auf (siehe Fig. 3). Der Haltering 16 wird hierbei durch eine radiale Schlitzöffnung 26 des Kupplungsteils 2 hindurch seitlich derart eingeschoben, daß dann die Lösearme 24 das Kupplungsteil 2 außen umgreifen. An ihren freien Enden weisen die Lösearme 24 jeweils einen Griffnocken 28 auf. Auf diese Weise kann durch Zusammendrücken der Lösearme 24 über die Griffnocken 28 in Richtung der beiden Pfeile 30 in Fig. 3 der Haltering 16 in Richtung der Pfeile 32 gespreizt werden, bis die formschlüssige Arretierung des Steckerteils 4 aufgehoben wird und das Steckerteil 4 somit entnommen werden kann.

Um nun den ordnungsgemäßen Abschluß des Einsteckvorganges, d.h. das sichere Verrasten des Halterings 16, von außen erkennbar und kontrollierbar zu machen, ist erfindungsgemäß mindestens ein die Arretierstellung anzeigendes Steckkontrollelement 34 vorgesehen, welches Bestandteil des Steckerteils 4 ist bzw. dem Steckerteil 4 funktionell zugeordnet ist.

Bei der bevorzugten Ausführungsform nach Fig. 1 bis 3 ist das Steckkontrollelement 34 als Anzeigeelement 36 ausgebildet, welches auf dem Steckerteil 4 in einer relativ zu der Raststufe 14 genau definierten Anordnung sitzt. Hierbei weist dieses Anzeigeelement 36 einen Sichtkontrollabschnitt 38 auf, der in der Arretierstellung (Fig. 2) außerhalb der Aufnahmeöffnung 8 in einer definierten Relativstellung gegenüber dem Kupplungsteil 2 angeordnet ist. Vorzugsweise - wie dargestellt - ist das Anzeigeelement 36 im wesentlichen ringförmig den Steckerschaft 10 umschließend ausgebildet, und der Sichtkontrollabschnitt 38 hat eine im wesentlichen ringscheibenförmige, sich senkrecht zur Steckachse erstreckende Kontur, wobei es besonders vorteilhaft ist, wenn der Sichtkontrollabschnitt 38 in der Arretierstellung im wesentlichen spaltfrei stirnseitig vor dem Kupplungsteil 2 anliegt (Fig. 2). Erst wenn diese Stellung von außen sichtbar erreicht ist, ist auch der Haltering 16 sicher formschlüssig hinter der Raststufe 14 verrastet. Um den definierten axialen Abstand zwischen der Raststufe 14 und dem Sichtkontrollabschnitt 38 zu erreichen, weist das Anzeigeelement 36 einen mit dem Sichtkontrollabschnitt 38 insbesondere einstückig verbundenen und sich an der Raststufe 14 des Steckerteils 4 abstützenden Stegansatz 40 auf. Dieser Stegansatz 40 ist insbesondere ringförmig und derart dünn ausgebildet,daß er im radial inneren Bereich der Raststufe 14 und damit unter Freilassung des äußeren Bereichs der Raststufe an dieser anliegt. Der äußere Bereich steht somit zur Verrastung mit dem Haltering 16 zur Verfügung.

Um das Anzeigeelement 36 auf dem Steckerteil 4 montieren zu können, weist es einen seinen Ringumfang unterbrechenden Schlitz 42 auf (s.Fig. 3). Aufgrund dieses Schlitzes 42 kann das Anzeigeelement 36 derart aufgeweitet werden, daß es seitlich auf das Steckerteil 4 aufgerastet werden kann.

In einer besonders vorteilhaften Weiterbildung der Ausführungsform nach Fig. 1 bis 3 ist vorgesehen, daß das Anzeigeelement 36 zusätzlich auch zum Arretieren der Lösearme 24 des Halterings 16 dient und somit zum Verhindern eines ungewollten Lösens des eingesteckten Steckerteils 4.

Hierzu weist das Anzeigeelement 36 mindestens einen sich axial erstreckenden und in der Arretierstellung im wesentlichen spielfrei zwischen die freien Enden der Haltering-Lösearme 24 bzw. zwischen die Griffnocken 28 eingreifenden Arretieransatz 44 auf. In der dargestellten Ausführung ist der Arretieransatz 44 aufgrund des Schlitzes 42 in zwei Abschnitte 44a und 44b unterteilt. Um hierbei ein Zusammendrücken der Abschnitte 44a, 44b in Umfangsrichtung mittels der Griffnocken 28 zu verhindern, weist das Kupplungsteil 2 gemäß Fig. 3 vorteilhafterweise einen zwischen die beiden Abschnitte 44a, b des Arretieransatzes 44 eingreifenden Stützansatz 46 auf. Zudem ist bevorzugt vorgesehen, daß das Anzeigeelement 36 in der Arretierstellung mit dem Kupplungsteil 2 über eine schnappbare Form- oder Kraftformschlußverbindung (Rastverbindung 48) so zusammenwirkt, daß das Anzeigeelement 36 gegen ein Abziehen von dem Kupplungsteil 2 arretiert wird. In Fig. 2 sind zwei Ausführungsbeispiele für diese Rastverbindung 48 veranschaulicht. Demnach weist der Arretieransatz 44 einen endseitigen Rastnocken auf, der eine Rastkante des Kupplungsteils 2 hintergreift. Alternativ oder zusätzlich kann auch vorgesehen sein, daß das Kupplungsteil 2 im Bereich des Arretieransatzes 44 einen Rastnocken aufweist, der in eine entsprechende Ausnehmung auf der Innenseite des Arretieransatzes 44 eingreift.

Hierbei ist es nun zudem vorteilhaft, zusätzlich auch eine an sich bekannte Schutzkappe 50 vorzusehen, die derart in axialer Richtung verschiebbar auf dem Kupplungsteil 2 sitzt, daß sie aus einer in Fig. 1 und 2 dargestellten Lösestellung in eine (nur in Fig. 6 dargestellte) Betriebsstellung verschoben werden kann, wobei im Falle der Ausführung nach Fig. 1 bis 3 in der Betriebsstellung der Schutzkappe 50 diese einerseits zusätzlich die Griffnocken 28 der Lösearme 24 fixiert sowie andererseits auch durch äußere Anlagefixierung des Arretieransatzes 44 die Rastverbindung 48 unterstützt.

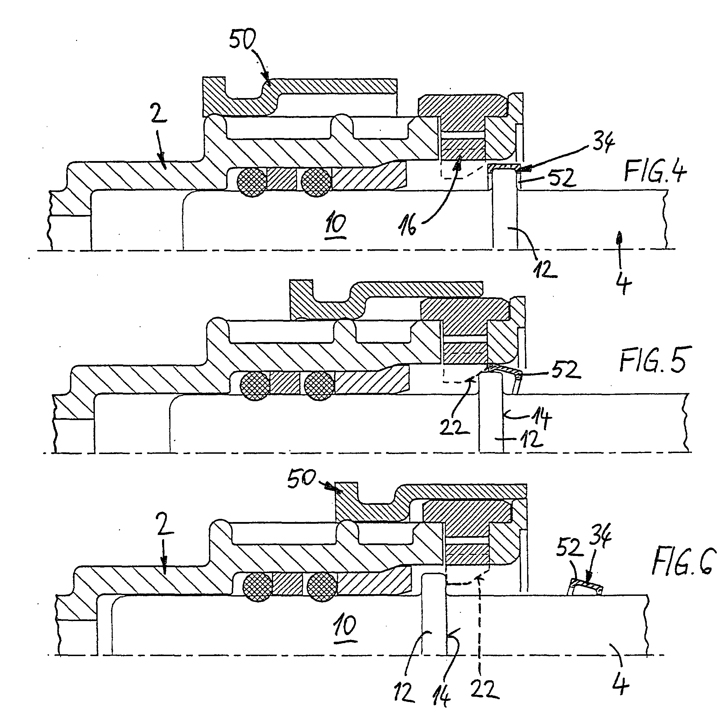

In Fig. 4 bis 6 ist nun bezüglich des Steckkontrollelementes 34 eine Möglichkeit veranschaulicht, die zusätzlich zu der Ausführung nach Fig. 1 bis 3 angewandt werden kann. Hierbei ist als Steckkontrollelement 34 ein Kontrollring 52 vorgesehen, der vor dem ersten Steckvorgang derart auf dem Steckerteil 4, insbesondere kraft- und/oder formschlüssig auf dem Ringsteg 12, gehaltert ist, daß er beim ersten Steckvorgang bei Erreichen der Arretierstellung deutlich sichtbar seine Lage verändert. Vorzugsweise wird der Kontrollring 52 gemäß Fig. 5 und 6 durch Anlage an dem Haltering 16 von dem Ringsteg 12 abgestreift, so daß er nachfolgend lose auf dem Steckerteil 4 sitzt (s. Fig. 6).

## Patentansprüche

1. Steckkupplung für Druckmittel-Leitungen, mit einem eine Aufnahmeöffnung (8) für ein Steckerteil (4) aufweisenden Kupplungsteil (2) und einem im Bereich der Aufnahmeöffnung (8) gelagerten, federelastisch spreizbaren Haltering (16) zum Arretieren des eingesteckten Steckerteils (4), indem er in einer Arretierstellung (Fig. 2) eine am Steckerteil (4) gebildete Raststufe (14) in radialer Richtung rastend formschlüssig hintergreift, wobei mindestens ein das Vorliegen der Arretierstellung anzeigendes Steckkontrollelement (34) als Bestandteil des Steckerteils (4) vorgesehen ist, welches als ein gesondertes, in einer relativ zu der Raststufe (14) definierten Anordnung auf dem Steckerteil (4) montiert sitzendes Anzeigeelement (36) ausgebildet ist und einen Sichtkontrollabschnitt (38) aufweist, der eine derart scheibenförmige, sich senkrecht zur Steckachse erstreckende Kontur aufweist und in einem derart definierten axialen Abstand von der Raststufe (14) entfernt liegend abgestützt ist, daß er in der Arretierstellung außerhalb der Aufnahmeöffnung (8) im wesentlichen spaltfrei stirnseitig an dem Kupplungsteil (2) anliegt.

2. Steckkupplung nach Anspruch 1,
**dadurch gekennzeichnet**,
dass die Raststufe (14) von einer Ringstufenfläche eines auf einem zylindrischen Steckerschaft (10) gebildeten, wulstartigen Ringsteges (12) gebildet ist.

3. Steckkupplung nach Anspruch 1 oder 2,
**dadurch gekennzeichnet**,
dass das Anzeigeelement (36) mindestens einen mit dem Sichtkontrollabschnitt (38) verbundenen, sich an der Raststufe (14) des Steckerteils (4) abstützenden Stegansatz (40) aufweist.

4. Steckkupplung nach einem oder mehreren der Ansprüche 1 bis 3,
**dadurch gekennzeichnet,**
dass das Steckkontrollelement (34) zusätzlich auch zum Arretieren des Steckerteils (4) gegen ungewolltes Lösen dient.

5. Steckkupplung nach einem oder mehreren der Ansprüche 1 bis 4,
**dadurch gekennzeichnet**,
dass der Haltering (16) einen den Ringumfang unterbrechenden Schlitz (20) und zwei angeformte, ausgehend vom Bereich des Schlitzes (20) und einer radialen Schlitzöffnung (26) des Kupplungsteils (2) in entgegengesetzten Richtungen etwa kreisbogenförmig das Kupplungsteil (2) umgreifende Lösearme (24) aufweist.

6. Steckkupplung nach Anspruch 5,
**dadurch gekennzeichnet,**
dass das Steckkontrollelement (34) mindestens einen sich axial erstreckenden und in der Arretierstellung zum Arretieren der Haltering-Lösearme (24) zwischen deren freie Enden eingreifenden Arretieransatz (44) aufweist.

7. Steckkupplung nach einem oder mehreren der Ansprüche 1 bis 6,
**dadurch gekennzeichnet,**
dass das ringförmige Anzeigeelement (36) zur Montage auf dem Steckerteil (4) einen den Ringumfang unterbrechenden Schlitz (42) aufweist, der vorzugsweise axial verlaufend im Bereich des Arretieransatzes (44) diesen in zwei Abschnitte (44a, b) unterteilend angeordnet ist.

8. Steckkupplung nach Anspruch 7,
**dadurch gekennzeichnet**,
dass das Kupplungsteil (2) einen zwischen die beiden Abschnitte (44a, b) des Arretieransatzes (44) eingreifenden Stützansatz (46) aufweist.

9. Steckkupplung nach einem oder mehreren der Ansprüche 1 bis 8,
**dadurch gekennzeichnet**,
dass das Anzeigeelement (36) in der Arretierstellung mit dem Kupplungsteil (2) über eine schnappbare Form- oder Kraftformschlußverbindung rastend zusammenwirkt.

10. Steckkupplung nach einem oder mehreren der Ansprüche 1 bis 9,
**gekennzeichnet durch**
eine in axialer Richtung verschiebbar auf dem Kupplunsgteil (2) angeordnete Schutzkappe (50), die insbesondere zur Arretierung des Halteringes (16) über den Bereich der freien Enden der Lösearme (24) diese arretierend schiebbar ist.

11. Steckkupplung nach Anspruch 10,
**dadurch gekennzeichnet**,
dass die Schutzkappe (50) zusätzlich auch zum Arretieren der Verrastung zwischen dem Anzeigeelement (36) und dem Kupplungsteil (2) dient.

12. Steckkupplung nach einem oder mehreren der Ansprüche 1 bis 11,
**dadurch gekennzeichnet**,
dass ein zusätzliches Steckkontrollelement (34) als ein vor dem ersten Steckvorgang derart auf dem Steckerteil (4) gehalterter Kontrollring (52) ausgebildet ist, dass dieser beim ersten Steckvorgang beim Erreichen der Arretierstellung seine Lage relativ zum Kupplungsteil (2) und/oder zum Steckerteil (4) verändert.

13. Steckkupplung nach Anspruch 12,
**dadurch gekennzeichnet**,
dass der Kontrollring (52) derart kraft- und/oder formschlüssig auf dem einseitig die Raststufe (14) aufweisenden Ringsteg (12) des Steckerteils (4) sitzt, dass er beim Steckvorgang insbesondere durch Anlage an dem Haltering (16) von dem Ringsteg (12) gelöst wird.

## Claims

1. Push-in coupling for pressure-medium lines, comprising a coupling part (2) having a location opening (8) for a connector part (4) and a retaining ring (16) which is mounted in the region of the location opening (8), is expandable in an elastic manner and is intended for locking the inserted connector part (4) by virtue of the fact that, in a locking position (Fig. 2), it engages in a latching positive-locking manner in the radial direction behind a latching step (14) formed on the connector part (4), at least one push-in control element (34) which indicates the existence of the locking position being provided as a component of the connector part (4), which push-in control element (34) is designed as a separate indicating element (36) sitting so as to be mounted on the connector part (4) in an arrangement defined relative to the latching step (14) and has a visual control section (38), which has such a disc-shaped contour extending perpendicularly to the push-in axis and is supported at such a defined axial distance away from the latching step (14) that, in the locking position, it bears essentially without a gap against the end face of the coupling part (2) outside the location opening (8).

2. Push-in coupling according to Claim 1, characterized in that the latching step (14) is formed by an annular step surface of a bead-like annular web (12) formed on a cylindrical connector shaft (10).

3. Push-in coupling according to Claim 1 or 2, characterized in that the indicating element (36) has at least one web extension (40) connected to the visual control section (38) and supported on the latching step (14) of the connector part (4).

4. Push-in coupling according to one or more of Claims 1 to 3, characterized in that the push-in control element (34) additionally also serves to lock the connector part (4) against unintentional release.

5. Push-in coupling according to one or more of Claims 1 to 4, characterized in that the, retaining ring (16) has a slot (20) interrupting the ring periphery and two integrally formed releasing arms (24) which, starting from the region of the slot (20) and a radial slot opening (26) of the coupling part (2), enclose the coupling part (2) in opposite directions roughly in a circular-arc shape.

6. Push-in coupling according to Claim 5, characterized in that the push-in control element (34) has at least one axially extending locking extension (44) engaging in the locking position between the free ends of the retaining-ring releasing arms (24) in order to lock the latter.

7. Push-in coupling according to one or more of Claims 1 to 6, characterized in that the annular indicating element (36), for mounting on the connector part (4), has a slot (42) which interrupts the ring periphery and is arranged preferably so as to run axially in the region of the locking extension (44) in such a way as to subdivide the latter into two sections (44a, b).

8. Push-in coupling according to Claim 7, characterized in that the coupling part (2) has a supporting extension (46) engaging between the two sections (44a, b) of the locking extension (44).

9. Push-in coupling according to one or more of Claims 1 to 8, characterized in that the indicating element (36), in the locking position, interacts in a latching manner with the coupling part (2) via asnap-action positive-locking or frictional/positive-locking connection.

10. Push-in coupling according to one or more of Claims 1 to 9, characterized by a protective cap (50) which is arranged so as to be displaceable in the axial direction on the coupling part (2) and, in particular in order to lock the retaining ring (16), can be pushed over the region of the free ends of the releasing arms (24) in such a way as to lock the latter.

11. Push-in coupling according to Claim 10, characterized in that the protective cap (50) additionally also serves to lock the latching between the indicating element (36) and the coupling part (2).

12. Push-in coupling according to one or more of Claims 1 to 11, characterized in that an additional push-in control element (34) is designed as a control ring (52) which is held on the connector part (4) before the initial push-in operation in such a way that this control ring (52), during the initial push-in operation, upon reaching the locking position, changes its position relative to the coupling part (2) and/or the connector part (4).

13. Push-in coupling according to Claim 12, characterized in that the control ring (52) sits on the annular web (12), having the latching step (14) on one side, of the connector part (4) in a frictional and/or positive-locking manner in such a way that it is released from the annular web (12) during the push-in operation, in particular by bearing against the retaining ring (16).

## Revendications

1. Raccord à emmanchement pour conduites de fluides sous pression comprenant une partie de raccord (2) qui présente une ouverture réceptrice (8) pour recevoir une partie mâle (4) et une bague de maintien (16) montée dans la région de l'ouverture réceptrice (8) et expansible avec l'élasticité d'un ressort, destinée à bloquer la partie mâle (4) emmanchée par le fait que, dans une position de blocage (Fig. 2), elle s'engage avec effet d'enclenchement et par sûreté de forme dans la direction radiale derrière un épaulement d'enclenchement (14) formé sur la partie mâle (4), et dans lequel il est prévu, en tant qu'élément constitutif de la partie mâle (4), au moins un élément (34) de contrôle de l'emmanchement qui indique la présence de la position de blocage et qui est constitué par un élément indicateur (36) distinct, reposant à l'état monté sur la partie mâle (4) dans une disposition définie par rapport à l'épaulement d'enclenchement (14), et présente un segment de contrôle visuel (38) qui présente un contour en forme de disque s'étendant perpendiculairement à l'axe d'emmanchement et qui est appuyé en se trouvant à une distance axiale de l'épaulement d'enclenchement (14) qui est définie de manière que, dans la position de blocage, il soit en appui frontalement contre la partie (2) du raccord, sensiblement sans fente, en dehors de l'ouverture réceptrice (8).

2. Raccord à emmanchement selon la revendication 1, caractérisé en ce que l'épaulement d'enclenchement (14) est formé par une surface d'épaulement annulaire d'une nervure annulaire (12) en forme de bourrelet, formée sur un fût cylindrique (10) de la partie mâle.

3. Raccord en emmanchement selon la revendication 1 ou 2, caractérisé en ce que l'élément indicateur (36) présente au moins une saillie en forme de nervure (40) solidaire du segment de contrôle visuel (38), qui prend appui contre l'épaulement d'enclenchement (14) de la partie mâle (4).

4. Raccord à emmanchement selon une ou plusieurs des revendications 1 à 3, caractérisé en ce que l'élément (34) de contrôle de l'emmanchement sert en supplément à bloquer la partie mâle (4) à l'encontre de la séparation involontaire.

5. Raccord à emmanchement selon une ou plusieurs des revendications 1 à 4, caractérisé en ce que la bague de maintien (16) présente une fente (20) qui interrompt la périphérie de la bague et deux bras de séparation (24) venus de formage et qui, en partant de la région de la fente (20) et d'une ouverture radiale de fente (26) de la partie (2) du raccord dans des sens inverses l'un de l'autre, entourent la partie (2) du raccord à peu prés en arc de cercle.

6. Raccord a emmanchement selon la revendication 5, caractérisé en ce que l'élément (34) de contrôle de l'emmanchement présente au moins un appendice de blocage (44) s'étendant axialement et qui, dans la position de blocage, s'engage, pour bloquer les bras de séparation (24) de la bague de maintien, entre les extrémités libres de ces bras.

7. Raccord à emmanchement selon une ou plusieurs des revendications 1 à 6, caractérisé en ce que l'élément indicateur annulaire (36) présente, pour le montage sur la partie mâle (4), une fente (42) qui interrompt la périphérie annulaire, et qui est disposée de préférence en s'étendant axialement dans la région de l'appendice de blocage (44) en divisant ce dernier en deux segments (44a, b).

8. Raccord à emmanchement selon la revendication 7, caractérisé en ce que la partie (2) du raccord présente une saillie d'appui (46) qui est engagée entre les deux segments (44a, b) de l'appendice de blocage (44);

9. Raccord à emmanchement selon une ou plusieurs des revendications 1 à 8, caractérisé en ce que, dans la position de blocage, l'élément indicateur (36) coopère avec la partie (2) du raccord avec effet d'enclenchement par l'intermédiaire d'une liaison encliquetable opérant par sûreté de forme ou par action de force et sûreté de forme.

10. Raccord à emmanchement selon une ou plusieurs des revendications 1 à 9, caractérisé par un capuchon de protection (50) disposé coulissant dans la direction axiale sur la partie (2) du raccord et qui, en particulier pour le blocage de la bague de maintien (16), peut être amené par translation pardessus la région des extrémités libres des bras de séparation (24), en les bloquant.

11. Raccord à emmanchement selon la revendication 10, caractérisé en ce que le capuchon de protection (50) sert en supplément également à bloquer l'enclenchement entre l'élément indicateur (36) et la partie (2) du raccord.

12. Raccord à emmanchement selon une ou plusieurs des revendications 1 à 11, caractérisé en ce qu'un élément supplémentaire de contrôle de l'emmanchement (34) est constitué par une bague de contrôle (52) qui, avant la première phase de l'emmanchement, est retenue sur la partie mâle (4) de telle manière que, lors de la première phase de l'emmanchement, au moment où l'on atteint la position de blocage, cette bague change de position par rapport à la partie (2) du raccord et/ou par rapport à la partie mâle (4).

13. Raccord à emmanchement selon la revendication 12, caractérisé en ce que la bague de contrôle (52) repose avec effet d'action de force et/ou de sûreté de forme sur la nervure annulaire (12) de la partie mâle (4) qui présente l'épaulement d'enclenchement (14) sur un côté, de telle manière que, lors de l'action d'emmanchement, elle soit dégagée de la nervure annuaire (12), en particulier sous l'effet du contact contre la bague de maintien (16).
